# EUROPÄISCHE PATENTSCHRIFT

(11) **EP 2 121 455 B1**
(45) Veröffentlichungstag und Bekanntmachung des Hinweises auf die Patenterteilung: **29.08.2012**
(21) Anmeldenummer: 07846981.4
(22) Anmeldetag: 04.12.2007
(51) Int. Cl.: B65D 1/02, B65D 8/04, B65D 47/18, B65D 51/22, B29C 49/20, B29C 70/74

(54) **KUNSTSTOFF-AMPULLE**
PLASTIC VIAL
AMPOULE EN MATIERE PLASTIQUE

(30) Priorität: 15.02.2007 DE 102007007474
(43) Veröffentlichungstag der Anmeldung: 25.11.2009
(73) Patentinhaber: Hansen, Bernd, 74429 Sulzbach-Laufen (DE)
(72) Erfinder: Hansen, Bernd, 74429 Sulzbach-Laufen (DE)
(74) Vertreter: Bartels, Martin Erich Arthur
(86) Internationale Anmeldenummer: PCT/EP2007/010499
(87) Internationale Veröffentlichungsnummer: WO 2008/098602

(56) Entgegenhaltungen:
- EP-A- 0 685 400
- WO-A-95/25665
- DE-A1- 3 445 542
- DE-C- 678 282
- US-A1- 2001 000 373

## Beschreibung

Die Erfindung betrifft eine Kunststoff-Ampulle, umfassend einen Behältniskörper, der ein hülsenartiges Halsteil mit einem Sitz aufweist, einen Einsatz, der einenends ein Abgabeteil für einen Behälterinhalt und anderenends eine zylinderförmige Umfangsfläche, die in dem Sitz des Halsteils festlegbar ist und eine oder mehrere Flächenunregelmäßigkeiten aufweist, aufweist, wobei der Behältniskörper im Blasformverfahren geformt, mit Behälterinhalt befüllt und mit seiner den Sitz bildenden Innenseite des Halsteils an die Außenseite der Umfangsfläche des Einsatzes angeformt ist.

Kunststoff-Ampullen dieser Art, bei denen der Behältniskörper aus einem thermoplastischen Material, etwa Polyethylen niedriger oder hoher Dichte, Polypropylen oder ähnlichen Stoffen hergestellt ist, die mit den vorgesehenen Behälterinhalten kompatibel sind, sind bekannt, vergleiche EP 0 803 442 B1. Solche Behältnisse dienen üblicherweise der Aufnahme und Abgabe von Flüssigkeiten für therapeutische oder kosmetische Zwecke, wobei die Abgabe der Flüssigkeit über den im Halsteil des Behältniskörpers sitzenden Einsatz erfolgt, dessen Austritts- oder Abgabeende entsprechend dem vorgesehenen Anwendungszweck vorgeformt sein kann, beispielsweise mit einem einen Tropfer bildenden Ausgang für die unmittelbare Abgabe von Tropfen, etwa von Augentropfen, nach einem Freilegen einer Tropferöffnung, was regelmäßig durch Abschrauben einer Behältniskappe erfolgt. Bei derartigen Behältnissen kann am Abgabebereich des Einsatzes auch ein Luer^{®}-Anschluß vorhanden sein. Ungeachtet der speziellen Ausbildung des Abgabebereiches kann dieser von einer End- oder Verschlußkappe abgedeckt sein, die vor der Benutzung des Behälterinhaltes vom Einsatz abgenommen wird.

Bei einem intensiven Gebrauch mit entsprechenden, am Abgabebereich des Einsatzes angreifenden Belastungen, besteht die Gefahr, dass der Einsatz im Sitz des Halsteiles des Behältniskörpers gelockert oder davon gelöst wird, so dass es zu einem Auslaufen des Behälterinhalts kommen kann. Um diese Gefahr zu minimieren, sind bei der bekannten Lösung (EP 0 803 442 B1) als Flächenunregelmäßigkeiten an der Umfangsfläche des Einsatzes vorstehende Rippen ausgebildet, die in regelmäßigen Abständen voneinander in Axialrichtung im wesentlichen über die gesamte axiale Erstreckung der Umfangsfläche verlaufen. Zusammen mit dem angeformten Halsteil des Behältniskörpers bilden diese Rippen eine Verzahnung, durch die der Einsatz gegen Verdrehen im Halsteil gesichert ist. Während diese Verzahnung zur Aufnahme von Drehmomenten geeignet ist, bieten diese in Axialrichtung parallel verlaufenden Rippen keinen ausreichenden Schutz gegen Axialbewegungen des Einsatzes relativ zum Halsteil. Um dem zu begegnen, weist der obere Endbereich der Umfangsfläche des Einsatzes bei der bekannten Lösung einen radial vorstehenden Flansch auf, um den das Material des Halsteiles derart herum geformt ist, dass beide Seitenflächen des Flansches vom Kunststoffmaterial des Halsteiles übergriffen sind. Abgesehen davon, dass ein derartiger, vom Kunststoffmaterial des Halsteiles übergriffener radial vorstehender Wulst zu einem wenig ansprechenden Aussehen führt, ergibt sich der Nachteil einer aufwändigen Ausbildung der Formvorrichtung und des vorgefertigten Einsatzes selbst.

Durch die DE 10 2005 025 760 A1 ist ferner ein Behältnis, insbesondere im Blasformverfahren hergestellte und in der Form gefüllte sowie verschlossene Kunststoff-Ampulle bekannt, mit einem an einen Behältniskörper sich anschließenden Halsteil, auf das ein erstes Kappenteil aufschraubbar ist und mit einem zweiten Kappenteil, das sich zumindest teilweise zwischen dem ersten Kappenteil und dem Halsteil erstreckt und das mit einer mindestens eine Öffnung aufweisenden Öffnungseinrichtung zum Öffnen des Behältniskörpers versehen ist, die mittels des ersten Kappenteiles verschließbar ist, wobei mittels des Aufschraubvorganges des ersten Kappenteiles dieses das zweite Kappenteil derart mitnimmt, dass die Öffnungseinrichtung regelmäßig in der Art eines Öffnungsdornes ausgebildet, die Öffnung des Behältniskörpers veranlaßt, wobei nach Abschrauben des ersten Kappenteils ein Verschlußteil in der Art eines Verschlußzapfens desselben die Öffnung der Öffnungseinrichtung freigibt und wobei dabei das zweite Kappenteil am Halsteil verbleibt. Dergestalt lassen sich zwei verschiedene Öffnungsvarianten mit nur einem Behältnis realisieren, unter Einbezug einer sogenannten offenen Kappenanordnung und unter Einsatz einer solchen mit Dornöffnungseinrichtung, die die membranartige verschlossene Abgabeöffnung freistechen kann.

Eine Kunststoff-Ampulle der eingangs genannten Art ist aus EP 0 685 400 A2 bekannt geworden. Bei der bekannten Ampulle wird ein verdrehsicherer Verschluss durch die Ausbildung von Rippen erreicht, welche sich in axialer Richtung komplett über den Verbindungsbereich bzw. die Umfangsfläche des Einsatzes erstrecken und am kopf- bzw. einsatzseitigen Ende in einen gemeinsamen umlaufenden Ring übergehen. Durch die Rippen wird der Kontakt zwischen dem Einsatz und der Innenfläche des Behältniskörpers verbessert und durch Eintritt von Material in die Zwischenräume, welche durch die Rippen definiert sind, eine gute Halterung des Einsatzes im Halsteil erreicht. Hierbei kann das thermoplastische Material des Behältnisses die zwischen den Rippen angeordneten Zwischenräume vollständig ausfüllen und eine permanente Dichtung und Halterung zwischen dem Halsteil und dem Einsatz ausbilden.

Im Hinblick auf diesen Stand der Technik stellt sich die Erfindung die Aufgabe, eine Ampulle der in Betracht stehenden Art zur Verfügung zu stellen, die bei einfacher und optisch ansprechender Gestaltung eine sichere Lagefixierung des Einsatzes im Halsteil des Behältniskörpers gewährleistet, wobei der Einsatz relativ zum Behältniskörper sowohl gegen Axialbewegungen als auch gegen Drehbewegungen gesichert festgelegt sein soll.

Erfindungsgemäß ist diese Aufgabe durch eine Kunststoff-Ampulle gelöst, die die Merkmale des Patentanspruches 1 in seiner Gesamtheit aufweist.

Dadurch, dass gemäß dem kennzeichnenden Teil des Patentanspruchs 1 an der Umfangsfläche eine oder mehrere Noppen und am Halsteil entsprechende Mulden ausgebildet sind, oder dass an der Umfangsfläche eine oder mehrere Mulden und am Halsteil entsprechende Noppen ausgebildet sind, wobei die Noppen jeweils in die Mulden derart eingreifen, dass der Einsatz relativ zum Behältniskörper sowohl gegen Axialbewegungen als auch gegen Drehbewegungen festgelegt ist, ergibt sich ein nicht nur gegen Drehmomente, sondern auch gegen Axialkräfte wirkender Formschluß zwischen Einsatz und angeformtem Halsteil des Behältniskörpers. Dadurch, dass als Flächenunregelmäßigkeiten eine oder mehrere vorstehende Noppen und eine oder mehrere den Noppen zugeordnete vertiefte Mulden vorgesehen sind, wobei durch Eingreifen der jeweiligen Noppe in die jeweils zugeordnete Mulde eine formschlüssige Fixierung ausgebildet ist, ist in einfacher Weise eine formschlüssige Fixierung von Einsatz und Halsteil des Behältniskörpers ausgebildet, durch die der Einsatz relativ zum Behältniskörper sowohl gegen Axialbewegungen als auch gegen Drehbewegungen festgelegt ist.

Bei vorteilhaften Ausführungsbeispielen ist die jeweilige Noppe im Querschnitt gesehen kreisförmig, halbkreisförmig oder mehreckig, insbesondere dreieckig oder quadratisch ausgebildet. Bei besonders vorteilhaften Ausführungsbeispielen bilden die Noppen eine kugelartige Wölbung, wobei vorzugsweise an der Umfangsfläche des Einsatzes eine vorspringende Erhebung gebildet ist. Es versteht sich, dass entsprechend den nach einwärts gerichteten Noppen Mulden durch Vertiefungen in der Umfangsfläche des Einsatzes gebildet sein können.

Vorzugsweise ist die Anordnung so getroffen, dass bei kreiszylinderförmiger Umfangsfläche des Einsatzes die Noppen auf zumindest einer in Umfangsrichtung verlaufenden Kreislinie verteilt angeordnet sind. Bei besonders bevorzugten Ausführungsbeispielen sind die Noppen auf mehreren in einem axialen Abstand voneinander verlaufenden Kreislinien angeordnet. Hierbei kann eine unterschiedliche Musteranordnung der Noppen vorgesehen sein, beispielsweise in der Weise, dass die Noppen in benachbarten Kreislinien in Umfangsrichtung zueinander versetzt angeordnet sind.

In den Kreislinien können auch unterschiedlich dimensionierte und/oder geformte Noppen vorgesehen sein.

Bei besonders bevorzugten Ausführungsbeispielen weist die Kunststoff-Ampulle eine auf ein Außengewinde des Einsatzes aufschraubbare Verschlußkappe auf. Diese kann auch mit einem inneren Dorn versehen sein, durch den beim Aufschrauben die Abgabeöffnung am Einsatz freistechbar ist.

Nachstehend ist die Erfindung anhand von in der Zeichnung dargestellten Ausführungsbeispielen im Einzelnen erläutert. Es zeigen:
- Fig. 1 eine in Längsrichtung aufgeschnittene perspektivische Schrägansicht eines Ausführungsbeispiels der Kunststoff-Ampulle, wobei zur Verdeutlichung der Erfindung der Einsatz in einer aus dem Halsteil des Behältniskörpers herausgenommenen Position dargestellt ist;
- Fig. 2 eine gegenüber Fig. 1 leicht vergrößert gezeichnete Seitenansicht lediglich des Einsatzes des Ausführungsbeispieles;
- Fig. 3 eine der Fig. 2 entsprechende Seitenansicht des Einsatzes gemäß einem zweiten Ausführungsbeispiel;
- Fig. 4 eine den Fig. 2 und 3 ähnliche Seitenansicht des Einsatzes eines weiteren Ausführungsbeispieles, und
- Fig. 5 einen noch weiter vergrößert gezeichneten Längsschnitt einer Verschlußkappe als Bestandteil der Ausführungsbeispiele gemäß Fig. 1 bis 4.

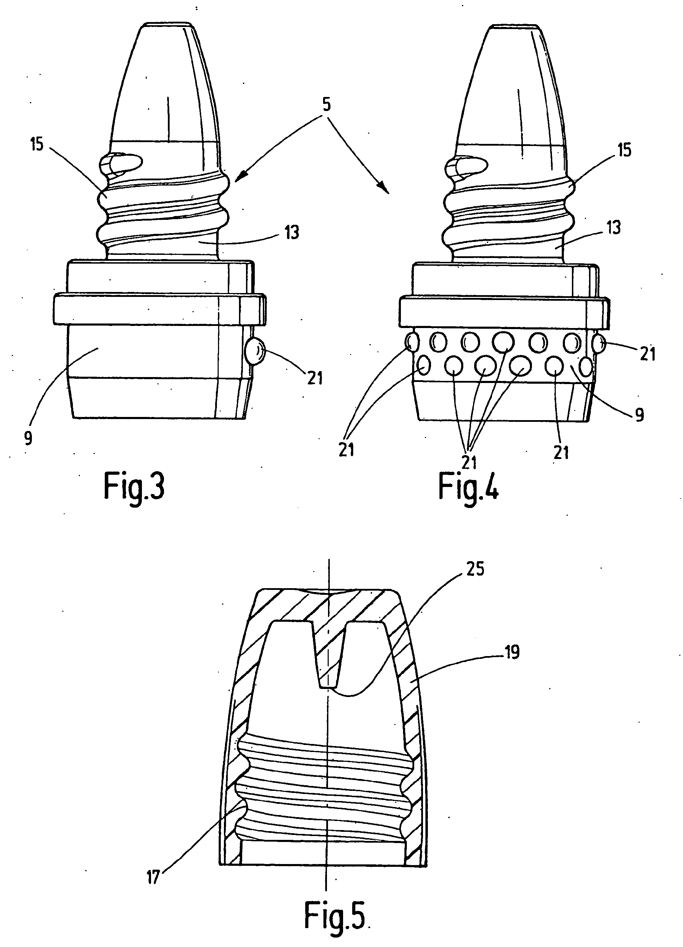

Nachstehend ist die Erfindung anhand von Ausführungsbeispielen beschrieben, bei denen im Halsteil 1 eines ampullenartigen Behältniskörpers 3 ein Einsatz 5 sitzt, der in der Art eines Tropfers gestaltet ist und eine Abgabeöffnung 7 aufweist, aus der der Behälterinhalt tropfenweise abgebbar ist, beispielsweise eine Flüssigkeit für therapeutische oder kosmetische Zwecke, wie Augentropfen oder dergleichen. Wie unten noch näher besprochen, kann der Einsatz auch andersartig ausgebildet und geformt sein, vorausgesetzt, dass er eine Umfangsfläche 9 aufweist, die in einem Sitz 11 des hülsenartigen Halsteiles 1 des Behältniskörpers 3 festlegbar ist. Bei den in der Zeichnung dargestellten Ausführungsbeispielen ist der Einsatz 5 ein Hohlkörper mit kreiszylinderförmiger Umfangsfläche 9, an die sich ein Abgabeteil 13 anschließt, das sich bis zur endseitigen Abgabeöffnung 7 hin verjüngt, wobei am Anfangsbereich des Abgabeteiles 13 ein Außengewinde 15 vorhanden ist, mit dem ein Innengewinde 17 einer nur in Fig. 5 gezeigten Verschlußkappe 19 verschraubbar ist.

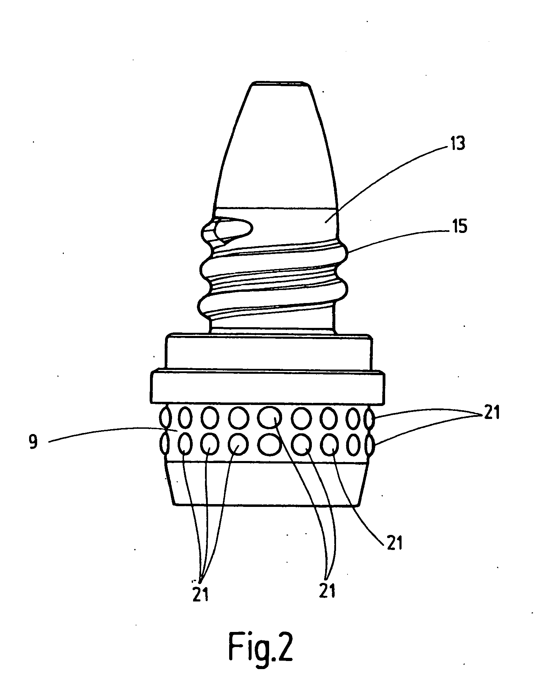

Bei der Herstellung nach einem der üblichen Blasformverfahren wird der Behältniskörper 3 geformt, ohne dass zunächst die endgültige Formgebung des Halsteiles 1 vorgenommen wird. In der Form wird sodann der Behälterinhalt eingefüllt. Vor der endgültigen Formgebung des Halsteiles 1 wird dann der vorgeformte Einsatz 5 in der Formeinrichtung so positioniert, dass er sich in einer Stellung befindet, in der bewegliche Formbacken das Halsteil 1 so formen, dass es mit seiner den Sitz 11 bildenden Innenseite an die Außenseite der Umfangsfläche 9 des Einsatzes 5 angeformt wird. Wie aus den Zeichnungen ersichtlich ist, bildet die Umfangsfläche 9 keine kontinuierliche oder stetige Fläche, sondern weist Flächenunregelmäßigkeiten auf, die bei den gezeigten Beispielen durch aus der Umfangsfläche 9 vorstehende Erhebungen gebildet sind, bei denen es sich bei den gezeigten Beispielen jeweils um Noppen 21 handelt, die in den Fig. 2 und 4 nicht sämtlich beziffert sind. Beim Anformen des Halsteiles 1 an die Noppen 21 ergeben sich in der Innenfläche des Sitzes 11 des Halsteiles 1 entsprechende Mulden 23, die durch die Noppen 21 eingedrückt sind, die an dem relativ formstabileren Einsatz 5 vorstehend ausgebildet sind. Es versteht sich, dass gleichermaßen anstelle der vorstehenden Noppen 21 am Einsatz 5 Mulden vorgesehen sein könnten, in die beim Anformen des Halsteiles 1 am Sitz 11 Kunststoffmaterial des Halsteiles in Noppenform eintreten würden. In jedem Falle kommt es durch die Flächenunregelmäßigkeiten an der Umfangsfläche 9 des Einsatzes 5 beim Anformen des Halsteiles 1 zu einer formschlüssigen Fixierung, durch die der Einsatz 5 relativ zum Behältniskörper 3 sowohl gegen Axialbewegungen als auch Drehbewegungen festgelegt ist.

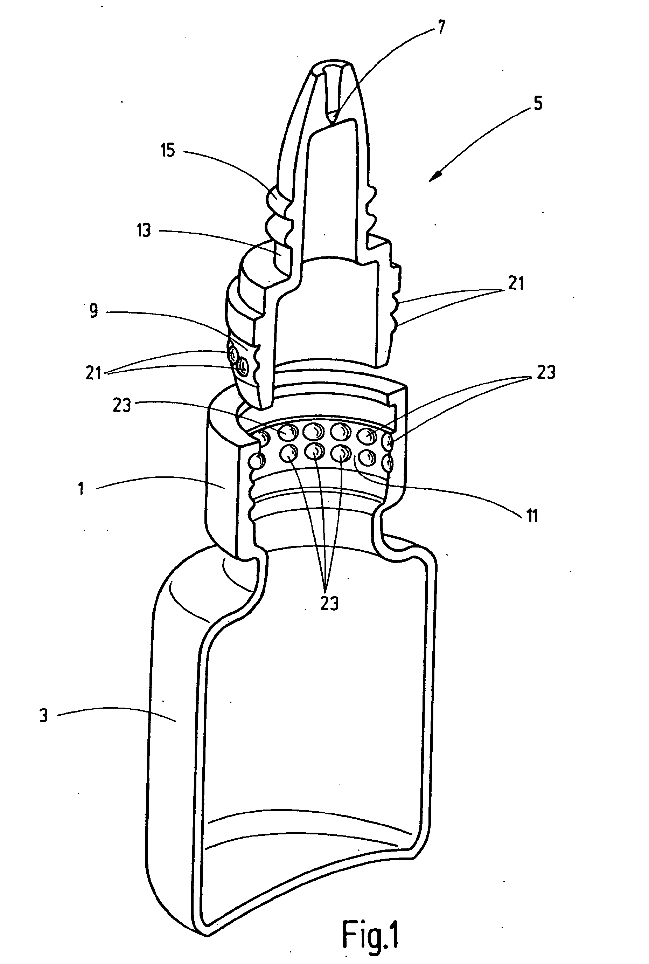

Während Fig. 3 ein Ausführungsbeispiel zeigt, bei dem lediglich eine geringe Anzahl von Noppen vorgesehen ist, wobei lediglich eine Noppe 21 sichtbar ist, zeigen die Fig. 1, 2 und 4 eine Musteranordnung von Noppen 21, bei denen die Noppen 21 jeweils auf zueinander parallel verlaufenden Kreislinien in Umfangsrichtung der Umfangsfläche 9 verteilt angeordnet sind. Dabei zeigt Fig. 2 ein Beispiel, bei dem die Noppen 21 beider Reihen in Axialrichtung fluchtend angeordnet sind, während Fig. 4 ein Beispiel zeigt, bei dem die Noppen 21 der beiden Reihen zueinander "auf Lücke" anbeordnet sind. Während die Fig. gleich gestaltete und gleich dimensionierte Noppen 21 kugelartiger Form zeigen, versteht sich, dass Noppen unterschiedlicher Form und Größen, die sich innerhalb der Reihen und/oder von Reihe zu Reihe unterscheiden können, vorgesehen sein könnten.

Aus Fig. 1 ist ersichtlich, dass die Abgabeöffnung 7 vorgeformt, jedoch am inneren Ende geschlossen ist. Wie bereits erwähnt zeigt Fig. 5 eine Verschlußkappe 19, die mit ihrem Innengewinde 17 auf das Außengewinde 15 des Einsatzes 5 aufschraubbar ist. Wie ebenfalls aus Fig. 5 zu ersehen ist, weist die Verschlußkappe 19 am Kappenboden einen zentralen, vorspringenden Dorn 25 auf, der so angeordnet und dimensioniert ist, dass bei vollständigem Aufschrauben der Kappe 19 auf den Einsatz 5 die Abgabeöffnung 7 durch den Dorn 25 verschlossen wird. Der Dorn 25 könnte auch so ausgebildet sein, dass er beim Aufschraubvorgang eine hermetisch verschlossene Behälteröffnung durchsticht (nicht dargestellt).

Während bei den dargestellten Ausführungsbeispielen der Einsatz 5 jeweils ein Abgabeteil 13 aufweist, das eine Art Tropfer bildet, versteht sich, dass Einsätze beliebiger Art oder Form vorgesehen sein können, an deren Umfangsfläche das Halsteil 1 des betreffenden Behältniskörpers 3 in der Weise angeformt werden kann, dass an der Umfängsfläche 9, vorgesehene Flächenunregelmäßigkeiten, deren axiale Erstreckung wesentlich geringer ist als die axiale Erstreckung der Umfangsfläche 9 eine Verbindung der hier aufgezeigten Art mit dem Halsteil bilden. So könnte beispielsweise der Einsatz einen mittels einer Injektionsnadel durchstechbaren Stopfenteil aufweisen, eine größer dimensionierte, beispielsweise mittels Schraubverschluß verschließbare Auslauföffnung, eine Einrichtung für einen Luer^{®}-Anschluß, einen angeformten Verschluß, der an einer Sollbruchstelle mittels eines Drehknebels manuell abdrehbar ist, oder dergleichen.

## Patentansprüche

1. Kunststoff-Ampulle, umfassend:
- einen Behältniskörper (3), der ein hülsenartiges Halsteil (1) mit einem Sitz (11) aufweist,
- einen Einsatz (5), der einenends ein Abgabeteil (13) für einen Behälterinhalt und anderenends eine zylinderförmige Umfangsfläche (9), die in dem Sitz (11) des Halsteils (1) festlegbar ist und eine oder mehrere Flächenunregelmäßigkeiten aufweist, aufweist,
- wobei der Behältniskörper (3) im Blasformverfahren geformt, mit Behälterinhalt befüllt und mit seiner den Sitz (11) bildenden Innenseite des Halsteils (1) an die Außenseite der Umfangsfläche (9) des Einsatzes (5) angeformt ist,
- **dadurch gekennzeichnet, dass** an der Umfangsfläche (9) eine oder mehrere Noppen (21) und am Halsteil (1) entsprechende Mulden (23) ausgebildet sind,
- oder dass an der Umfangsfläche (9) eine oder mehrere Mulden und am Halsteil (1) entsprechende Noppen ausgebildet sind,
- wobei die Noppen (21) jeweils in die Mulden (23) derart eingreifen, dass der Einsatz (5) relativ zum Behältniskörper (3) sowohl gegen Axialbewegungen als auch gegen Drehbewegungen festgelegt ist.

2. Kunststoff-Ampulle nach Anspruch 1, **dadurch gekennzeichnet, dass** die jeweilige Noppe (21) im Querschnitt gesehen kreisförmig, halbkreisförmig oder mehreckig, insbesondere dreieckig oder quadratisch ist.

3. Kunststoff-Ampulle nach einem der vorhergehenden Ansprüche,
**dadurch gekennzeichnet, dass** die jeweilige Noppe (21) eine kugelartige Wölbung bildet.

4. Kunststoff-Ampulle nach einem der vorhergehenden Ansprüche,
**dadurch gekennzeichnet, dass** eine Mehrzahl von Noppen (21) vorgesehen ist.

5. Kunststoff-Ampulle nach Anspruch 4, **dadurch gekennzeichnet, dass** die Umfangsfläche (9) des Einsatzes (5) kreiszylinderförmig ist, und dass die Noppen (21) auf zumindest einer in Umfangsrichtung verlaufenden Kreislinie verteilt angeordnet sind.

6. Kunststoff-Ampulle nach Anspruch 4 oder 5, **dadurch gekennzeichnet, dass** die Noppen (21) auf mehreren in einem axialen Abstand voneinander verlaufenden Kreislinien angeordnet sind.

7. Kunststoff-Ampulle nach Anspruch 6, **dadurch gekennzeichnet, dass** die Noppen (21) in benachbarten Kreislinien in Umfangsrichtung zueinander versetzt angeordnet sind.

8. Kunststoff-Ampulle nach einem der Ansprüche 4 bis 7, **dadurch gekennzeichnet, dass** die Noppen (21) unterschiedlich dimensioniert und/oder geformt sind.

9. Kunststoff-Ampulle nach einem der vorhergehenden Ansprüche,
**dadurch gekennzeichnet, dass** der Einsatz (5) ein Hohlkörper mit einem länglichen Abgabeteil (13) ist, das sich an die im Halsteil (1) des Behältniskörpers (3) aufzunehmende Umfangsfläche (9) anschließt und sich, in sich verjüngender Gestalt, bis zu einem Abgabeende erstreckt, an dem sich eine freigebbare Abgabeöffnung (7) befindet.

10. Kunststoff-Ampulle nach Anspruch 9, **dadurch gekennzeichnet, dass** die Abgabeöffnung (7) durch Freistechen mittels eines Betätigungselementes (19) freigebbar ist.

11. Kunststoff-Ampulle nach Anspruch 10, **dadurch gekennzeichnet, dass** es eine als Betätigungselement fungierende Verschlußkappe (19) aufweist, die auf ein Außengewinde (15) des Einsatzes (5) aufschraubbar und mit einem inneren Dorn (25) versehen ist, durch den beim Aufschrauben die Abgabeöffnung (7) verschließbar ist.

## Claims

1. A plastic ampule comprising:
- a receptacle body (3) that has a sleeve-like neck part (1) with a seat (11),
- an insert (5) that has on one end a delivery part (13) for a container content, and on the other end has a cylindrical peripheral surface (9) which can be fixed in the seat (11) of the neck part (1) and has one or more surface irregularities,
- the receptacle body (3) being moulded by the blow moulding process, being filled with container content, and being moulded onto the outer side of the peripheral surface (9) of the insert (5) with its inside of the neck part (1) forming the seat (11),
- **characterised in that** one or more nubs (21) are formed on the peripheral surface (9) and corresponding indentations (23) are formed on the neck part (1),
- or that one or more indentations are formed on the peripheral surface (9) and corresponding nubs are formed on the neck part (1),
- the nubs (21) respectively engaging in the indentations (23) such that the insert (5) is secured against axial movements and against rotary movements relative to the receptacle body (3).

2. The plastic ampule according to Claim 1, **characterised in that** the respective nub (21), viewed in cross-section, is circular, semicircular or polygonal, in particular triangular or square.

3. The plastic ampule according to either of the preceding claims, **characterised in that** the respective nub (21) has a spherical convexity.

4. The plastic ampule according to any of the preceding claims, **characterised in that** a plurality of nubs (21) is provided.

5. The plastic ampule according to Claim 4, **characterised in that** the peripheral surface (9) of the insert (5) is circularly cylindrical, and that the nubs (21) are located distributed on at least one circular line which runs in the peripheral direction.

6. The plastic ampule according to Claim 4 or 5, **characterised in that** the nubs (21) are located on several circular lines which run at an axial distance from one another.

7. The plastic ampule according to Claim 6, **characterised in that** the nubs (21) are located offset to one another in adjacent circular lines in the peripheral direction.

8. The plastic ampule according to any of Claims 4 to 7, **characterised in that** the nubs (21) are dimensioned and/or shaped differently.

9. The plastic ampule according to any of the preceding claims, **characterised in that** the insert (5) is a hollow body with an elongated delivery part (13) which is connected to the peripheral surface (9) which is to be held in the neck part (1) of the receptacle body (3) and extends in a tapering shape to a delivery end on which a delivery opening (7) which can be cleared is located.

10. The plastic ampule according to Claim 9, **characterised in that** the delivery opening (7) can be cleared by puncturing by means of an actuating element (19).

11. The plastic ampule according to Claim 10, **characterised in that** it has a sealing cap (19) acting as an actuating element and which can be screwed onto an outer thread (15) of the insert (5) and is provided with an inner spike (25) by means of which the delivery opening (7) can be sealed when screwing on.

## Revendications

1. Ampoule en matière plastique, comprenant :
- un corps (3) de récipient, qui a une partie (1) de col de type en manchon avec un siège (11),
- un insert (5), qui a à une extrémité une partie (13) de distribution du contenu du récipient et à l'autre extrémité une surface (9) périphérique de forme cylindrique, qui peut être fixée dans le siège (11) de la partie (1) de col et qui a une ou plusieurs irrégularités de surface,
- dans laquelle le corps (3) du récipient est moulé par un procédé de moulage par soufflage et rempli d'un contenu de récipient et est appliqué par son côté intérieur, formant le siège (11), de la partie (1) de col au côté extérieur de la surface (9) périphérique de l'insert (5),
- **caractérisée en ce que**, sur la surface (9) périphérique, sont formés un ou plusieurs bossages (21) et, sur la partie (1) de col, des moulures (23) correspondantes,
- ou **en ce que**, sur la surface (9) périphérique, sont formés une ou plusieurs moulures et, sur la partie (1) de col, des bossages correspondants,
- les bossages (21) pénétrant respectivement dans les moules (23) de manière à fixer l'insert (5) par rapport au corps (3) du récipient, tant à l'encontre de déplacements axiaux qu'également à l'encontre de déplacements en rotation.

2. Ampoule en matière plastique suivant la revendication 1, **caractérisée en ce que** le bossage (21) respectif est, vu en section transversale, circulaire, hémicirculaire ou polygonal, en étant notamment triangulaire ou carré.

3. Ampoule en matière plastique suivant l'une des revendications précédentes, **caractérisée en ce que** le bossage (21) respectif forme une courbure de type sphérique.

4. Ampoule en matière plastique suivant l'une des revendications précédentes, **caractérisée en ce qu'**il est prévu une multiplicité de bossages (21).

5. Ampoule en matière plastique suivant la revendication 4, **caractérisée en ce que** la surface (9) périphérique de l'insert (5) est en forme de cylindre circulaire et **en ce que** les bossages (21) sont répartis sur au moins une ligne circulaire s'étendant dans la direction périphérique.

6. Ampoule en matière plastique suivant la revendication 4 ou 5, **caractérisée en ce que** les bossages (21) sont disposés sur plusieurs lignes circulaires s'étendant à une distance axiale les unes des autres.

7. Ampoule en matière plastique suivant la revendication 6, **caractérisée en ce que** des bossages (21) sont décalés les uns par rapport aux autres dans la direction périphérique dans des lignes circulaires voisines.

8. Ampoule en matière plastique suivant l'une des revendications 4 à 7, **caractérisée en ce que** les bossages (21) ont des dimensions et/ou des formes différentes.

9. Ampoule en matière plastique suivant l'une des revendications précédentes, **caractérisée en ce que** l'insert (5) est un corps creux ayant une partie (13) de distribution oblongue, qui se raccorde à la surface (9) périphérique recevant la partie (1) de col du corps (3) du récipient et qui s'étend sous une forme se rétrécissant jusqu'à une extrémité de distribution où se trouve une ouverture (7) de distribution pouvant être dégagée.

10. Ampoule en matière plastique suivant la revendication 9, **caractérisée en ce que** l'ouverture (7) de distribution peut être dégagée en la dégageant au moyen d'un élément (19) d'actionnement.

11. Ampoule en matière plastique suivant la revendication 10, **caractérisée en ce qu'**elle a un capuchon (19) de fermeture, qui sert d'élément d'actionnement, qui peut être vissé sur un filetage (15) extérieur de l'insert (5) et qui est muni d'un mandrin (25) intérieur, par lequel l'ouverture (7) de distribution peut être fermée lors du vissage.
